# EUROPÄISCHE PATENTSCHRIFT

(11) **EP 4 214 619 B1**
(45) Veröffentlichungstag und Bekanntmachung des Hinweises auf die Patenterteilung: **06.11.2024**
(21) Anmeldenummer: 21758697.3
(22) Anmeldetag: 11.08.2021
(51) Int. Cl.: G06F 21/44, G08G 1/017, G06Q 50/40, G08G 1/01, G08G 1/04, H04L 67/12, H04W 4/44, H04W 12/06, H04W 12/71

(54) **VERFAHREN UND VORRICHTUNG ZUR AUTHENTIFIZIERUNG EINES FAHRZEUGS**
METHOD AND DEVICE FOR AUTHENTICATING A VEHICLE
PROCÉDÉ ET DISPOSITIF D'AUTHENTIFICATION D'UN VÉHICULE

(30) Priorität: 15.09.2020 DE 102020124050
(43) Veröffentlichungstag der Anmeldung: 26.07.2023
(73) Patentinhaber: Bayerische Motoren Werke Aktiengesellschaft, 80809 München (DE)
(72) Erfinder: SCHRAUT, Michael, 80686 München (DE); STRASSBERGER, Markus, 85456 Wartenberg (DE)
(86) Internationale Anmeldenummer: PCT/EP2021/072429
(87) Internationale Veröffentlichungsnummer: WO 2022/058096

(56) Entgegenhaltungen:
- EP-A2- 1 160 734
- WO-A1-03/036569
- DE-A1- 4 446 674
- US-A1- 2018 268 238
- US-A1- 2019 390 504

## Beschreibung

Die Erfindung betrifft ein Verfahren und eine entsprechende Vorrichtung, mit denen Fahrzeug-Kennzeichen in sicherer Weise ausgewertet werden können, z.B. um ein Fahrzeug für eine bestimmte Funktion bzw. Dienstleistung zu authentifizieren und/oder freizuschalten.

Ein Fahrzeug kann über sein Kennzeichen eindeutig identifiziert werden. Es bietet sich daher an, die Authentifizierung eines Fahrzeugs für ein oder mehrere Funktionen und/oder Dienstleistungen über das Kennzeichen des Fahrzeugs zu ermöglichen. Problematisch ist dabei, dass eine Speicherung und/oder Übertragung von Kennzeichen datenschutzrechtlich problematisch sein kann, insbesondere dann, wenn Fahrzeugnutzer der Speicherung und/oder Übertragung nicht explizit zugestimmt haben.

US 2018/0268238A1 beschreibt ein Verfahren zur verbesserten Erkennung eines Nummernschildes. US 2019/390504 A1 beschreibt ein Zugangssystem zu einer Garage. WO 03/036569 A1 beschreibt ein Verfahren zum Ermöglichen der Einfahrt und der Ausfahrt zu einem Parkbereich.

Das vorliegende Dokument befasst sich mit der technischen Aufgabe, eine besonders sichere Authentifizierung und/oder Freischaltung eines Fahrzeugs für eine Funktion und/oder Dienstleistung auf Basis eines Fahrzeug-Merkmals, insbesondere auf Basis eines Fahrzeug-Kennzeichens, zu ermöglichen.

Die Aufgabe wird durch jeden der unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird eine Vorrichtung zur Authentifizierung eines ersten (Kraft-) Fahrzeugs für eine Funktion beschrieben. Beispielhafte Funktionen sind, eine Aufnahme eines Energieträgers (z.B. eines Kraftstoffs oder Strom) durch das Fahrzeugs zum Antrieb des ersten Fahrzeugs; eine Zufahrt zu einem zufahrtbeschränkten Bereich; und/oder ein Parken des ersten Fahrzeugs auf einem Parkplatz oder in einem Parkhaus.

Die Vorrichtung ist eingerichtet, ein von zumindest einem Fahrzeug-Merkmal des ersten Fahrzeugs abhängiges Merkmals-Codewort zu ermitteln (insbesondere zu empfangen). Das Fahrzeug-Merkmal kann ein Kennzeichen des ersten Fahrzeugs umfassen, insbesondere sein. Das Merkmals-Codewort kann mittels einer kryptographischen Hashfunktion, z.B. SHA-2, ermittelt worden sein. Des Weiteren kann das Merkmals-Codewort mittels zumindest einer vordefinierten Zeichenfolge, insbesondere mittels zumindest eines vordefinierten SALTs, verschlüsselt worden sein. Das Merkmals-Codewort kann somit das Fahrzeug-Merkmal in verschlüsselter Form anzeigen.

Des Weiteren kann die Vorrichtung eingerichtet sein, das Merkmals-Codewort mit einer Vielzahl von unterschiedlichen Referenz-Codewörtern für eine entsprechende Vielzahl von unterschiedlichen Fahrzeugen zu vergleichen. Die Vielzahl von unterschiedlichen Fahrzeugen können die Fahrzeuge sein, die für die Funktion authentifiziert und/oder freigeschaltet sind.

Die Vorrichtung kann eingerichtet sein, (im Vorfeld zu der Überprüfung eines Merkmals-Codewortes) die Vielzahl von Referenz-Codewörtern von ein oder mehreren unterschiedlichen Dienstleistern zur Abrechnung einer Gebühr für eine erbrachte Funktion zu empfangen und in einer Referenz-Datenbank zu speichern. Dabei können die einzelnen Referenz-Codewörter in Zusammenhang mit einem Zertifikat empfangen werden. Das Zertifikat für ein Referenz-Codewort für ein Fahrzeug und für einen (Zahlungs-) Dienstleister kann anzeigen, dass eine Überprüfung dahingehend stattgefunden hat, dass der Dienstleister berechtigt ist, für den Eigentümer des Fahrzeugs eine Gebühr für eine erbrachte Funktion zu zahlen.

Mit anderen Worten, die Vorrichtung kann eingerichtet sein, für ein Referenz-Codewort von einem bestimmten Dienstleister und für ein bestimmtes Fahrzeug ein Zertifikat zu empfangen. Es kann dann auf Basis des Zertifikats ermittelt werden, ob der Dienstleister dazu berechtigt ist, eine Gebühr für eine für das bestimmte Fahrzeug erbrachte Funktion abzurechnen. Die Vorrichtung kann eingerichtet sein, das Referenz-Codewort abzulehnen, wenn ermittelt wird, dass der Dienstleister nicht dazu berechtigt ist, eine Gebühr für eine für das bestimmte Fahrzeug erbrachte Funktion abzurechnen. So kann die Sicherheit weiter erhöht werden.

Die unterschiedlichen Referenz-Codewörter können jeweils auf Basis eines Fahrzeug-Merkmals des jeweiligen Fahrzeugs ermittelt worden sein. Die einzelnen Referenz-Codewörter können mittels einer kryptographischen Hashfunktion, z.B. SHA-2, ermittelt worden sein. Des Weiteren können die einzelnen Referenz-Codewörter mittels zumindest einer vordefinierten Zeichenfolge, insbesondere mittels zumindest eines vordefinierten SALTs, verschlüsselt worden sein. Die einzelnen Referenz-Codewörter können somit jeweils zumindest ein Fahrzeug-Merkmal eines Fahrzeugs in verschlüsselter Form anzeigen.

Dabei können die Vielzahl von Referenz-Codewörtern und das Merkmals-Codewort jeweils auf Basis eines einheitlichen Fahrzeug-Merkmals (des jeweiligen Fahrzeugs) und/oder auf Basis einer einheitlichen kryptographischen Hashfunktion ermittelt worden sein. Mit anderen Worten, für die unterschiedlichen Codewörter kann die gleiche kryptographische Hashfunktion verwendet worden sein. Des Weiteren kann für die unterschiedlichen Codewörter jeweils das gleiche Fahrzeug-Merkmale (z.B. jeweils das Kennzeichen des jeweiligen Fahrzeugs) verwendet worden sein.

Die Vergleiche des Merkmals-Codewortes mit den unterschiedlichen Referenz-Codewörtern ermöglichen es somit, in verschlüsselter Weise das Fahrzeug-Merkmale des ersten Fahrzeugs mit dem entsprechenden Fahrzeug-Merkmal der Vielzahl von unterschiedlichen Fahrzeugen zu vergleichen.

Die Vorrichtung ist ferner eingerichtet, auf Basis der Vergleiche zu bestimmen, ob das erste Fahrzeug für die Funktion authentifiziert ist oder nicht. Insbesondere kann die Vorrichtung eingerichtet sein, zu bestimmen, dass das erste Fahrzeug für die Funktion authentifiziert ist, wenn ein Referenz-Codewort aus der Vielzahl von Referenz-Codewörtern identifiziert wird, dass dem Merkmals-Codewort entspricht. Alternativ oder ergänzend kann die Vorrichtung eingerichtet sein, zu bestimmen, dass das erste Fahrzeug nicht für die Funktion authentifiziert ist, wenn kein Referenz-Codewort aus der Vielzahl von Referenz-Codewörtern identifiziert wird, dass dem Merkmals-Codewort entspricht.

Die Vorrichtung ermöglicht somit eine zuverlässige und sichere, insbesondere in Bezug auf Datenschutzbestimmungen, Authentifizierung bzw. Überprüfung einer Berechtigung eines Fahrzeugs für eine bestimmte Funktion.

Die Vorrichtung kann eingerichtet sein, wenn bestimmt wird, dass das erste Fahrzeug für die Funktion authentifiziert ist, eine Rückmeldung an eine (separate, örtliche getrennte) Anbietereinheit eines Anbieters der Funktion zu senden, um eine Bereitstellung der Funktion zu veranlassen (z.B. um einen Tank- bzw. Ladevorgang zu ermöglichen oder um einen Zugang zu ermöglichen). Alternativ oder ergänzend kann die Vorrichtung eingerichtet sein, wenn bestimmt wird, dass das erste Fahrzeug für die Funktion authentifiziert ist, eine Abrechnungseinheit zu veranlassen, eine Gebühr für die bereitgestellte Funktion von einem Nutzer des ersten Fahrzeugs an den Anbieter der Funktion zu übertragen. So kann in sicherer und zuverlässiger Weise (insbesondere ohne Betrachtung des Fahrzeug-Merkmals in Klartext) die Funktion bereitgestellt und abgerechnet werden.

Alternativ oder ergänzend kann die Vorrichtung eingerichtet sein, wenn bestimmt wird, dass das erste Fahrzeug für die Funktion authentifiziert ist, eine Rückmeldung an eine Signalisierungseinheit (z.B. an ein Lichtelement, etwa eine Lampe) zu senden, wobei die Signalisierungseinheit eingerichtet ist, dem Nutzer des ersten Fahrzeugs zu signalisieren (z.B. durch Ausgabe eines optischen Signals), dass bestimmt wurde, dass das erste Fahrzeug für die Funktion authentifiziert ist. So kann der Komfort für einen Nutzer weiter erhöht werden.

Die Vielzahl von Referenz-Codewörtern kann mehrere Teilgruppen von Referenz-Codewörtern umfassen. Die unterschiedlichen Teilgruppen können dabei mit unterschiedlichen Anbietern von Funktionen und/oder mit unterschiedlichen Abrechnungseinheiten (z.B. mit unterschiedlichen Zahlungsdienstleistern) assoziiert sein. Die Referenz-Codewörter von unterschiedlichen Teilgruppen können mit jeweils einer unterschiedlichen Zeichenfolge verschlüsselt worden sein. Andererseits können die Referenz-Codewörter der gleichen Teilgruppe mit der gleichen Zeichenfolge verschlüsselt worden sein. Die unterschiedlichen Anbieter und/oder die unterschiedlichen Abrechnungseinheiten können somit jeweils mit einer unterschiedlichen Zeichenfolge (insbesondere einem unterschiedlichen SALT) assoziiert sein.

Die Vorrichtung kann eingerichtet sein, auf Basis der Vergleiche zu ermitteln, dass ein erstes Referenz-Codewort aus der Vielzahl von Referenz-Codewörtern dem ersten Merkmals-Codewort entspricht. Des Weiteren kann die Vorrichtung eingerichtet sein, auf Basis der Zeichenfolge, die zur Verschlüsselung des ersten Referenz-Codewortes verwendet wurde, eine Anbietereinheit eines Anbieters der Funktion und/oder eine Abrechnungseinheit zur Abrechnung einer Gebühr für die erbrachte Funktion zu ermitteln. So können der Komfort und die Sicherheit bei der Bereitstellung einer Funktion und/oder bei der Abrechnung einer bereitgestellten Funktion weiter erhöht werden.

Gemäß einem Aspekt wird ein System zur Authentifizierung eines ersten Fahrzeugs für eine Funktion beschrieben. Das System umfasst eine Sensoreinheit (z.B. mit einer Kamera), die eingerichtet ist, ein Fahrzeug-Merkmal (insbesondere ein Kennzeichen) des ersten Fahrzeugs zu erfassen. Die Sensoreinheit ist ferner eingerichtet, auf Basis des Fahrzeug-Merkmals ein Merkmals-Codewort zu ermitteln. Des Weiteren umfasst das System eine in diesem Dokument beschriebene Authentisierungs-Vorrichtung, die eingerichtet ist, das erste Fahrzeug auf Basis des Merkmals-Codeworts zu authentifizieren.

Das System kann zumindest eine Abrechnungseinheit eines Abrechnungs-Dienstleisters umfassen. Die Abrechnungseinheit kann eingerichtet sein, eine Gebühr für eine erbrachte Funktion abzurechnen.

Die Sensoreinheit kann eingerichtet sein, eine vordefinierte Zeichenfolge, insbesondere ein vordefiniertes SALT, zur Verschlüsselung des Fahrzeug-Merkmals eines Fahrzeugs und zur Ermittlung des Merkmals-Codeworts des Fahrzeugs von dem Abrechnungs-Dienstleister zu empfangen.

Insbesondere kann die Sensoreinheit von unterschiedlichen Abrechnungs-Dienstleistern jeweils unterschiedliche Zeichenfolgen empfangen. Ein Fahrzeug-Merkmal kann dann jeweils mit allen vorliegenden Zeichenfolgen verschlüsselt werden, so dass mehrere unterschiedliche Merkmals-Codewörter für die mehreren unterschiedlichen Abrechnungs-Dienstleister ermittelt werden. Diese können dann von der Authentifizierungs-Vorrichtung mit den Referenz-Codewörtern verglichen werden. So kann in zuverlässiger und sicherer Weise ein Fahrzeug für eine bestimmte Funktion authentifiziert werden. Ferner kann so in effizienter und sicherer Weise der für die Abrechnung zuständige Abrechnungs-Dienstleister identifiziert werden.

Die vordefinierte Zeichenfolge eines Zahlungs-Dienstleisters kann zeitlich befristet sein. Alternativ oder ergänzend kann die vordefinierte Zeichenfolge ggf. nur räumlich begrenzt gültig sein. Alternativ oder ergänzend kann die vordefinierte Zeichenfolge ggf. nur für ein oder mehrere bestimmte Funktionen gültig sein. So kann die Sicherheit des Systems weiter erhöht werden.

Das System kann eine Mehrzahl von unterschiedlichen Authentifizierungs-Vorrichtungen für eine entsprechende Mehrzahl von jeweils unterschiedlichen Referenz-Codewörtern umfassen. Die Sensoreinheit kann eingerichtet sein, auf Basis einer Eigenschaft des ermittelten Merkmals-Codewortes zu ermitteln (z.B. unter Verwendung einer vordefinierten Zuweisungsregel), an welche der Mehrzahl von unterschiedlichen Authentifizierungs-Vorrichtungen das Merkmals-Codewort zur Authentifizierung zu übermitteln ist. So können die Performance und die Sicherheit des Systems weiter erhöht werden.

Gemäß einem weiteren Aspekt wird ein Verfahren zur Authentifizierung eines ersten Fahrzeugs für eine Funktion beschrieben. Das Verfahren umfasst das Ermitteln eines von einem Fahrzeug-Merkmal des ersten Fahrzeugs abhängigen Merkmals-Codewort. Des Weiteren umfasst das Verfahren das Vergleichen des Merkmals-Codewortes mit einer Vielzahl von unterschiedlichen Referenz-Codewörtern für eine entsprechende Vielzahl von unterschiedlichen Fahrzeugen. Außerdem umfasst das Verfahren das Bestimmen, auf Basis der Vergleiche, ob das erste Fahrzeug für die Funktion authentifiziert ist oder nicht.

Gemäß einem weiteren Aspekt wird ein Software (SW) Programm beschrieben. Das SW Programm kann eingerichtet werden, um auf einem Prozessor ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 ein beispielhaftes System zur Auswertung eines Fahrzeug-Merkmals;
Figur 2 eine beispielhafte Codewort-Datenbank; und
Figur 3 ein Ablaufdiagramm eines beispielhaften Verfahrens zur Auswertung eines Fahrzeug-Merkmals.

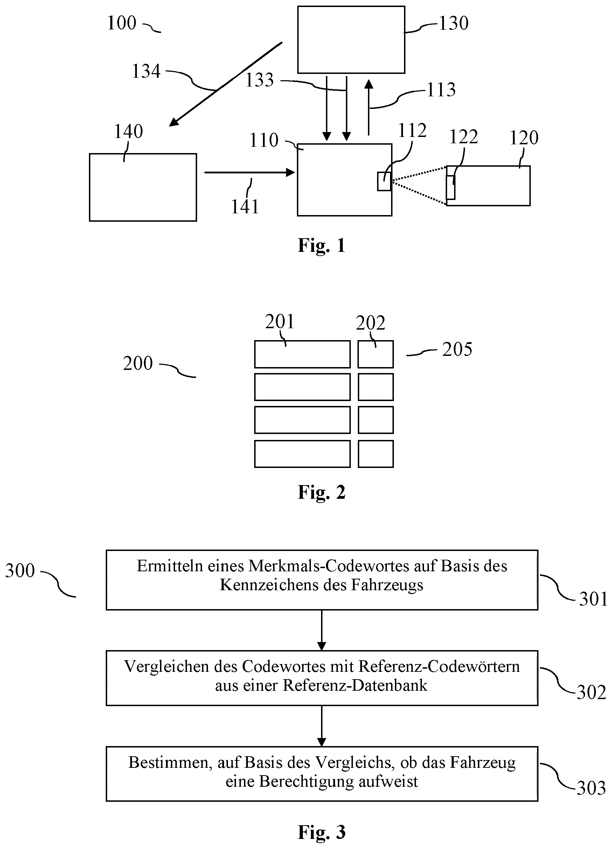

Wie eingangs dargelegt, befasst sich das vorliegende Dokument mit der sicheren, insbesondere in Bezug auf Datenschutzbestimmungen, Authentifizierung und/oder Freischaltung eines (Kraft-) Fahrzeugs (z.B. eines PKW, eines LKW, eines Busses und/oder eines Motorrads) für eine Dienstleistung und/oder für eine Funktion. In diesem Zusammenhang zeigt Fig. 1 ein beispielhaftes System 100, das eine Anbietereinheit 110 umfasst, die von einem Anbieter einer Funktion und/oder einer Dienstleistung betrieben wird. Beispielhafte Funktionen und/oder Dienstleistungen sind z.B. das Auftanken eines Energiespeichers eines Fahrzeugs 120, der Zugang zu einem Autokino, der Zugang zu einer bestimmten Straße, etc.

Die Anbietereinheit 110 kann eingerichtet sein, mittels eines Sensors bzw. mittels einer Sensoreinheit 112, insbesondere mittels einer Kamera, Sensordaten, insbesondere Bilddaten, in Bezug auf ein Fahrzeug-Merkmal 122, insbesondere in Bezug auf das Kennzeichen, des Fahrzeugs 120 zu erfassen. Des Weiteren können die Anbietereinheit 110 und/oder die Sensoreinheit 112 eingerichtet sein, das Fahrzeug-Merkmal 122 zu verschlüsseln, um ein Merkmals-Codewort 113 zu ermitteln. Zu diesem Zweck kann eine kryptographische Hashfunktion (wie z.B. SHA-2) verwendet werden. Dabei kann das Fahrzeug-Merkmal 122 zusammen mit ein oder mehreren SALTs verschlüsselt werden, um die Datensicherheit weiter zu erhöhen.

Das Merkmals-Codewort 113 kann an eine separate Überprüfungseinheit 130 gesendet werden (z.B. an einen sogenannten Broker). Die Überprüfungseinheit 130 wird in diesem Dokument auch allgemein als Vorrichtung bezeichnet. Die Überprüfungseinheit 130 kann eingerichtet sein, das Merkmals-Codewort 113 mit Referenz-Codewörtern 201 aus einer Referenz-Datenbank 200 zu vergleichen (siehe Fig. 2). Die Referenz-Datenbank 200 kann eine Vielzahl von Referenz-Datensätzen 205 für eine entsprechende Vielzahl von unterschiedlichen Fahrzeugen 120 umfassen.

Ein Referenz-Datensatz 205 für ein bestimmtes Fahrzeug 120 kann ein Referenz-Codewort 201 für das bestimmte Fahrzeug 120 umfassen. Das Referenz-Codewort 201 wurde dabei auf die gleiche Weise, d.h. auf Basis des gleichen Fahrzeug-Merkmals 112, auf Basis der gleichen kryptographischen Hashfunktion und/oder auf Basis der gleichen ein oder mehreren SALTs, wie das Merkmals-Codewort 113 für das bestimmte Fahrzeug 120 ermittelt, insbesondere verschlüsselt

Des Weiteren kann der Referenz-Datensatz 205 für das bestimmte Fahrzeug 120 Funktionsinformation 202 umfassen. Beispielhafte Funktionsinformation 202 ist,
- Information in Bezug auf die ein oder mehreren Funktionen und/oder Dienstleistungen, für die das bestimmte Fahrzeug 120 berechtigt ist; und/oder
- Information in Bezug auf eine Abrechnungsmethode, z.B. in Bezug auf einen Abrechnungsdienstleister, zur Abrechnung einer Gebühr für eine in Anspruch genommene Dienstleistung.

Die Überprüfungseinheit 130 kann eingerichtet sein, das von der Anbietereinheit 110 bereitgestellte Merkmals-Codewort 113 mit ein oder mehreren Referenz-Codewörtern 201 aus der Referenz-Datenbank 200 zu vergleichen. Insbesondere kann die Überprüfungseinheit 130 eingerichtet sein, zu überprüfen, ob das Merkmals-Codewort 113 mit einem der Referenz-Codewörter 201 aus der Referenz-Datenbank 200 übereinstimmt oder nicht. Die Überprüfungseinheit 130 kann dann in Abhängigkeit von dem Überprüfen eine Rückmeldung 133 an die Anbietereinheit 110 geben. Insbesondere kann als Rückmeldung 133 eine Freigabe für die Funktion und/oder die Dienstleistung erteilt werden, wenn eine Übereinstimmung zwischen dem Merkmals-Codewort 113 und einem Referenz-Codewort 201 festgestellt wurde. Des Weiteren kann ggf. Funktionsinformation 202 aus dem Referenz-Datensatz 201 für das identifizierte Referenz-Codewort 201 zurückgemeldet werden. Andererseits kann eine Abweisung als Rückmeldung 133 bereitgestellt werden, wenn keine Übereinstimmung zwischen dem Merkmals-Codewort 113 und irgendeinem Referenz-Codewort 201 aus der Referenz-Datenbank 200 festgestellt werden konnte.

Die Überprüfungseinheit 130 kann ferner eingerichtet sein, Abrechnungsdaten 134 an eine Abrechnungseinheit 140 zu senden. Die Abrechnungsdaten 134 können z.B. einen Geldbetrag anzeigen, den das Fahrzeug 120 bzw. der Nutzer des Fahrzeugs 120 für die durch den Anbieter erbrachte Funktion und/oder Dienstleistung zu zahlen hat. Die Abrechnungseinheit 140 kann z.B. von einer Bank oder von einem Zahlungsdienstleister betrieben werden. Es kann somit von der Überprüfungseinheit 130 direkt eine Abrechnung veranlasst werden. Die Abrechnungseinheit 140 kann dann der Anbietereinheit 110 eine Bestätigung 141 darüber zusenden, dass die Abrechnung der erbrachten Funktion und/oder Dienstleistung erfolgt ist. Diese Kommunikation kann erfolgen, ohne dass dafür das Fahrzeug-Merkmal 122 im Klartext kommuniziert werden muss.

Das System 100 ermöglicht somit eine Authentifizierung und/oder Freischaltung eines Fahrzeugs 120 für eine Funktion und/oder Dienstleistung, ohne dass dazu eine explizite Speicherung und/oder Auswertung eines Fahrzeug-Merkmals 122, insbesondere eines Kennzeichens, erforderlich ist.

Es wird somit ein Verfahren beschrieben, bei dem z.B. ein Fahrzeug-Kennzeichen 122 (und/oder ein anderes Fahrzeug-Merkmal) eingelesen und ggf. mit einem oder mehreren SALTS verschlüsselt wird. Die ein oder mehreren Salts können dabei direkt in einem Speicher (z.B. einem Read-Only-Speicher) auf dem Scansystem 112 (z.B. einer Kamera) abgelegt werden. Dies kann z.B. durch einen Betreiber der Überprüfungseinheit 130 und/oder durch einen Betreiber der Anbietereinheit 110 und/oder durch einen Betreiber der Abrechnungseinheit 140 erfolgen.

Des Weiteren kann die verschlüsselte Version der Kennzeichen+Salt als Referenz-Codewort 201 in einer Referenz-Datenbank 200 gespeichert werden. Dies kann für alle Nutzer des Systems 100, insbesondere für alle Fahrzeuge 120, die das System 100 nutzen, erfolgen. Die Referenz-Datenbank 200 kann auf einem unabhängigen Brokersystem, d.h. auf der Überprüfungseinheit 130, gespeichert sein, welches Vergleiche von Hashwerten, d.h. von Codewörtern 113, 201, durchführen und damit den Anbieter einer Funktion und/oder Dienstleistung und das Scansystem 112 zusammenbringen kann.

Das Verfahren kann folgende Schritte aufweisen: Ein Scanner 112 scannt ein Kennzeichen 122 und verschlüsselt es mit allen ein oder mehreren hinterlegten SALTs und sendet die ein oder mehreren Hashwerte 113 an den unabhängigen Broker 130. Der Broker 130 vergleicht die ein oder mehreren Hashwerte 113 mit allen Referenz-Hashwerten 201, die von dem jeweiligen Anbieter der Funktion und/oder Dienstleistung hinterlegt wurden. Wenn ein Match gefunden wird, so erteilt der Broker 130 eine Berechtigung und verbindet ggf. weitere Systeme zur Folgekommunikation. Wenn kein Match gefunden werden kann, kann festgestellt werden, dass das Kennzeichen 122 bei keinem Anbieter gemeldet ist. Das Kennzeichen 122 wurde dabei aber nicht im Klartext versendet und/oder verglichen.

In einem Beispiel fährt ein Fahrzeug 120 z.B. an eine Zapfsäule. Das Kennzeichen 122 wird gescannt und der Hashwert 113 wird an den Broker 130 übermittelt. Der Broker 130 meldet nach positiver Überprüfung, dass der Hashwert 113 eine Tankberechtigung aufweist. Die Zapfsäule wird daraufhin freigeschaltet. Des Weiteren kann der Broker 130 den Zahlungsdienstleister 140 mit der Tankstelle zur automatischen Abrechnung verbinden. Dieses Verfahren kann in ähnlicher Weise für eine Zufahrtsberechtigung und/oder für eine Parkdienstleistung verwendet werden.

Im Vorfeld zum Betrieb des beschriebenen Systems 100 können von unterschiedlichen Betreibern bzw. Dienstleistern von unterschiedlichen Abrechnungseinheiten 140 (z.B. von unterschiedlichen Dienstleistern für die Abrechnung einer bestimmten Funktion) jeweils unterschiedliche Betreiberspezifische Zeichenfolgen, insbesondere SALTs, bereitgestellt werden, im Broker 130 und/oder in dem Scanner 112. Des Weiteren können die einzelnen Betreiber bzw. Dienstleister dem Broker 130 die mit der jeweiligen Betreiber-spezifischen Zeichenfolge verschlüsselten Kennzeichen 122 der Kunden des jeweiligen Betreibers bereitstellen, als Referenz-Codewörter 201.

Der Scanner 112 kann dann ein erfasstes Kennzeichen 122 jeweils mit jedem einzelnen der Mehrzahl von Zeichenfolgen verschlüsseln, um eine entsprechende Mehrzahl von Merkmals-Kennwörtern 113 zu ermitteln. Die Mehrzahl von Merkmals-Kennwörtern 113 kann dann an den Broker 130 gesendet werden, und der Broker 130 kann durch Vergleich mit den Referenz-Codewörtern 201 feststellen, ob das erfasste Kennzeichen 122 bei einem Betreiber bzw. Dienstleister registriert ist, und bei welchem Betreiber bzw. Dienstleister das erfasste Kennzeichen 122 registriert ist.

Ein (Zahlungs-) Dienstleister (z.B. ein Tankabrechner) kann somit sein SALT über den Broker 130 an die einzelnen Scanner 112 (Kameras) senden, die damit Kennzeichen 122 verschlüsseln und an den Broker 130 senden. Für jeden Zahlungs-Dienstleister gibt es mindestens ein eigenes SALT. Der Zahlungs-Dienstleister legt gleichzeitig seine Kundendaten in der Form von Hashwerten (Kundenkennzeichen+SALT), d.h. als Referenz-Codewörter 201, bei dem Broker ab. Die Scanner 112 vergleichen nicht selbst, sondern senden die N Hashwerte 113 (für die N Zahlungs-Dienstleister) an den Broker 130 der diese dann mit den Referenz-Codewörtern 201 vergleicht. Erfolgt ein Match wird der Zahlungs-Dienstleister anhand des SALTs des Zahlungs-Dienstleisters ermittelt. Daten in Bezug auf den Betreiber der Funktion (z.B. der Trankstelle) und/oder in Bezug auf den zu zahlenden Betrag können dann an den Zahlungs-Dienstleister weitergegeben werden. Die Zahlung kann auf Basis bekannter Online-Zahlungsmethoden erfolgen.

Die SALTs (und folglich die damit ermittelten Hashwerte) können zeitlich begrenzt sein, um die Sicherheit weiter zu erhöhen. Ein Zahlungs-Dienstleister kann daher nach Ablauf eines vordefinierten Zeitraums dem Broker 130 ein oder mehrere neue SALTs und mit den ein oder mehreren neuen SALTs verschlüsselte Referenz-Codewörter 201 bereitstellen. Die abgelaufenen SALTs und/oder Referenz-Codewörter 201 können dann gelöscht werden.

Alternativ oder ergänzend können die SALTs und/oder die Referenz-Codewörter 201 eine räumliche Gültigkeit aufweisen (und jeweils nur für eine bestimmte Region gültig sein). So kann die Performance eines Scanners 112 und/oder eines Broker 130 erhöht werden.

Alternativ oder ergänzend können die einzelnen SALTs eine semantische Beschränkung in Bezug auf einzelne Funktionen bzw. Funktionsgruppen aufweisen. Beispielsweise kann ein SALT ggf. nur für eine Tankfunktion oder nur für eine Parkfunktion gültig sein. Damit kann die Anzahl von Hashwerten 113 reduziert werden, die ein Scanner 112 berechnen muss. Es kann somit die Effizienz des Systems 100 erhöht werden.

Zur Lastverteilung und/oder zur weiteren Erhöhung der Sicherheit können die Hashwerte 201 eines (Zahlungs-) Anbieters bzw. Dienstleisters x auf eine Anzahl y > 1 Broker 130 verteilt, insbesondere derart, dass auf jedem dieser Broker 130 nur ein Teil der bekannten Hashwerte 201 gespeichert wird. Der Algorithmus der Verteilung kann dabei auf dem resultierenden Hashwert 201 basieren und ist dem Dienstleister und/oder dem Scanner 112 bekannt. Insbesondere kann zur Verteilung der Hashwerte 201 ein standardisiertes Verfahren verwendet werden. Beispiel können alle geraden Hashwerte 201 auf einem Broker A, und alle ungeraden Hashwerte 201 können auf einen Broker B gespeichert werden. Ggf. kann aus Performancegründen eine weitere Spiegelung erfolgen, um beispielsweise eine schnelle Antwortzeit zu garantieren. Beispielsweise können Broker A & B (gerade Hashwerte 201), und Broker C &D (ungerade Hashwerte 201) jeweils die gleichen Datensätze 205 aufweisen. Alle geraden Hashwerte 201 können dann von dem Scanner 112 an Broker A und B des Dienstleisters gesendet werden. Alle ungeraden Hashwerte 201 können an Broker C und D gesendet werden, so dass bei Überlast eines Brokers noch eine schnelle Antwort durch den jeweils anderen Broker zu erwarten ist. Die gilt analog für beliebige andere Verteilungsalgorithmen.

Das System 100 kann eine Schnittstelle zur Signalisierung eines erfolgreichen und/oder eines erfolglosen Matches anzeigen. Beispielsweise kann das System 100 eingerichtet sein, zu erkennen, ob ein Fahrzeug 120 berechtigt ist, auf einem spezifischen Parkplatz zu parken (z.B., weil der Fahrzeug-Eigentümer und der Parkplatz-Eigentümer eine entsprechende Vereinbarung haben). Der Broker 130 erkennt einen Match und signalisiert dies dem Dienstleister. Falls vom Dienstleister zugestimmt, kann eine weitere Anzeigeeinrichtung informiert werden, beispielsweise eine Lampe am entsprechenden Parkplatz, die bei erfolgreichem Match grün leuchtet (und sonst nicht). So wird ein unmittelbares Feedback darüber ermöglicht, ob das System 100 das Fahrzeug richtig erkannt hat.

Ggf. kann die Funktion des Brokers 130 in dem Scanner 112 integriert sein. Der Scanner 112 muss dann eine entsprechende Rechen-Performance aufweisen. Ferner wird dadurch zumindest teilweise die Sicherheit in Bezug auf Datenschutz beeinträchtigt.

Das System 100 kann derart ausgebildet sein, dass über ein Zertifizierungssystem sichergestellt wird oder der Nachweis erbracht werden muss, dass der Dienstanbieter eine vertragliche Vereinbarung mit dem Eigentümer eines Fahrzeugs 120 hat. Beispielsweise kann ein zertifizierter Identity-Manager bestätigten, dass Hr. Mustermann (z.B. im System 100 mit dem Benutzernamen m.mustermann repräsentiert) der aktuell rechtmäßige Eigentümer des Fahrzeugs 120 mit dem Kennzeichen 122 X-YZ 1234 ist. Auf Basis dieser Bestätigung kann dann der Dienstanbieter bei einem staatlichen oder unabhängigen Institut (beispielsweise der Zulassungsbehörde) ein elektronisches Zertifikat erfragen, welches ausweist, dass das Kennzeichen X-YZ 1234 und die Identität des Fahrzeugeigentümers Hr. Mustermann übereinstimmen. Das Zertifikat besagt somit, dass der Dienstanbieter für das Kennzeichen X-YZ 1234 eine gültige vertragliche Beziehung zum Eigentümer aufweist. Auf dieser Basis kann eine weitere unabhängige Instanz mit dem SALT des Dienstanbieters und dem Kennzeichen des Fahrzeugs 120 den Hashwert (d.h. das Referenz-Codewort 201) berechnen. Dabei kann ein Zertifikat über die gesamte Rechtmäßigkeit des Datenabgleiches eingebunden werden. Dem Broker 130 werden der Hashwert 201 und das Zertifikat zur Verfügung gestellt. Der Broker 130 kann dabei die Anfrage ggf. nur bei gültigem Zertifikat annehmen. So kann die Datensicherheit weiter erhöht werden.

Fig. 3 zeigt ein Ablaufdiagramm eines beispielhaften (ggf. Computerimplementierten) Verfahrens 300 zur Authentifizierung eines ersten Fahrzeugs 120 für eine Funktion (z.B. für einen Tank- oder Ladevorgang). Das Verfahren 300 umfasst das Ermitteln 301 eines von einem Fahrzeug-Merkmal 122 des ersten Fahrzeugs 120 abhängigen Merkmals-Codewort 113. Das Merkmals-Codewort 113 kann einen Hashwert umfassen oder ein Hashwert sein, der mit einer kryptographischen Hashfunktion auf Basis des Fahrzeug-Merkmals 122 ermittelt wurde. Das Merkmals-Codewort 113 kann von einer Sensoreinheit 112 und/oder von einer Anbietereinheit 110 des Anbieters der Funktion ermittelt und z.B. an eine Überprüfungseinheit bzw. an einen Broker 130 gesendet werden.

Das Verfahren 300 umfasst ferner das Vergleichen 302 des Merkmals-Codewortes 113 mit einer Vielzahl von unterschiedlichen Referenz-Codewörtern 201 für eine entsprechende Vielzahl von unterschiedlichen Fahrzeugen 120. Die Referenz-Codewörter 201 können im Vorfeld ermittelt und auf einer Speichereinheit (der Überprüfungseinheit 130) gespeichert worden sein.

Das Verfahren 300 umfasst ferner das Bestimmen 303, auf Basis der Vergleiche, ob das erste Fahrzeug 120 für die Funktion authentifiziert ist oder nicht. So kann in zuverlässiger und sicherer Weise, insbesondere in Bezug auf den Datenschutz, eine Authentifizierung von Fahrzeugen ermöglicht werden.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Vorrichtung (130) zur Authentifizierung eines ersten Fahrzeugs (120) für eine Funktion; wobei die Vorrichtung (130) eingerichtet ist,
- ein von einem Fahrzeug-Merkmal (122) des ersten Fahrzeugs (120) abhängiges Merkmals-Codewort (113) zu ermitteln;
- das Merkmals-Codewort (113) mit einer Vielzahl von unterschiedlichen Referenz-Codewörtern (201) für eine entsprechende Vielzahl von unterschiedlichen Fahrzeugen (120) zu vergleichen; wobei die Vielzahl von Referenz-Codewörtern (201) mehrere Teilgruppen von Referenz-Codewörtern (201) umfasst; wobei die Referenz-Codewörter (201) von unterschiedlichen Teilgruppen mit jeweils einer unterschiedlichen Zeichenfolge verschlüsselt wurden; wobei die Referenz-Codewörter (201) der gleichen Teilgruppe mit der gleichen Zeichenfolge verschlüsselt wurden;
- auf Basis der Vergleiche zu bestimmen, ob das erste Fahrzeug (120) für die Funktion authentifiziert ist oder nicht;
- auf Basis der Vergleiche zu ermitteln, dass ein erstes Referenz-Codewort (201) aus der Vielzahl von Referenz-Codewörtern (201) dem ersten Merkmals-Codewort (113) entspricht; und
- auf Basis der Zeichenfolge, die zur Verschlüsselung des ersten Referenz-Codewortes (201) verwendet wurde, eine Anbietereinheit (110) eines Anbieters der Funktion und/oder eine Abrechnungseinheit (140) zur Abrechnung einer Gebühr für die erbrachte Funktion zu ermitteln.

2. Vorrichtung (130) gemäß Anspruch 1, wobei die Vorrichtung (130) eingerichtet ist, wenn bestimmt wird, dass das erste Fahrzeug (120) für die Funktion authentifiziert ist,
- eine Rückmeldung (133) an eine Anbietereinheit (110) eines Anbieters der Funktion zu senden, um eine Bereitstellung der Funktion zu veranlassen; und/oder
- eine Rückmeldung (133) an eine Signalisierungseinheit zu senden, wobei die Signalisierungseinheit eingerichtet ist, einem Nutzer des ersten Fahrzeugs (120) zu signalisieren, dass bestimmt wurde, dass das erste Fahrzeug (120) für die Funktion authentifiziert ist; und/oder
- eine Abrechnungseinheit (140) zu veranlassen, eine Gebühr für die bereitgestellte Funktion von einem Nutzer des ersten Fahrzeugs (120) an den Anbieter der Funktion zu übertragen.

3. Vorrichtung (130) gemäß einem der vorhergehenden Ansprüche, wobei die Vielzahl von Referenz-Codewörtern (201) und das Merkmals-Codewort jeweils
- auf Basis eines einheitlichen Fahrzeug-Merkmals (122); und/oder
- auf Basis einer einheitlichen kryptographischen Hashfunktion ermittelt wurden.

4. Vorrichtung (130) gemäß einem der vorhergehenden Ansprüche, wobei die Vielzahl von Referenz-Codewörtern (201) und das Merkmals-Codewort mittels zumindest einer vordefinierten Zeichenfolge, insbesondere mittels zumindest eines vordefinierten SALTs, verschlüsselt wurden.

5. Vorrichtung (130) gemäß einem der vorhergehenden Ansprüche, wobei die Vorrichtung (130) eingerichtet ist,
- zu bestimmen, dass das erste Fahrzeug (120) für die Funktion authentifiziert ist, wenn ein Referenz-Codewort (201) aus der Vielzahl von Referenz-Codewörtern (201) identifiziert wird, dass dem Merkmals-Codewort (113) entspricht; und/oder
- zu bestimmen, dass das erste Fahrzeug (120) nicht für die Funktion authentifiziert ist, wenn kein Referenz-Codewort (201) aus der Vielzahl von Referenz-Codewörtern (201) identifiziert wird, dass dem Merkmals-Codewort (113) entspricht.

6. Vorrichtung (130) gemäß einem der vorhergehenden Ansprüche, wobei die Vorrichtung (130) eingerichtet ist, die Vielzahl von Referenz-Codewörtern (201) von ein oder mehreren unterschiedlichen Dienstleistern zur Abrechnung einer Gebühr für eine erbrachte Funktion zu empfangen und in einer Referenz-Datenbank (200) zu speichern.

7. Vorrichtung (130) gemäß Anspruch 6, wobei die Vorrichtung (130) eingerichtet ist,
- für ein Referenz-Codewort von einem bestimmten Dienstleister und für ein bestimmtes Fahrzeug (120) ein Zertifikat zu empfangen;
- auf Basis des Zertifikats zu überprüfen, ob der Dienstleister dazu berechtigt ist, eine Gebühr für eine für das bestimmte Fahrzeug (120) erbrachte Funktion abzurechnen; und
- das Referenz-Codewort abzulehnen, wenn ermittelt wird, dass der Dienstleister nicht dazu berechtigt ist, eine Gebühr für eine für das bestimmte Fahrzeug (120) erbrachte Funktion abzurechnen.

8. Vorrichtung (130) gemäß einem der vorhergehenden Ansprüche, wobei das Fahrzeug-Merkmal (122) ein Kennzeichen des ersten Fahrzeugs (120) umfasst, insbesondere ist.

9. Vorrichtung (130) gemäß einem der vorhergehenden Ansprüche, wobei die Funktion umfasst,
- eine Aufnahme eines Energieträgers zum Antrieb des ersten Fahrzeugs (120);
- eine Zufahrt zu einem zufahrtbeschränkten Bereich; und/oder
- ein Parken des ersten Fahrzeugs (120) auf einem Parkplatz oder in einem Parkhaus.

10. System (100) zur Authentifizierung eines ersten Fahrzeugs (120) für eine Funktion; wobei das System (100) umfasst,
- eine Sensoreinheit (112), die eingerichtet ist,
- ein Fahrzeug-Merkmal (122) des ersten Fahrzeugs (120) zu erfassen; und
- auf Basis des Fahrzeug-Merkmals (122) ein Merkmals-Codewort (113) zu ermitteln, und
- eine Authentifizierungs-Vorrichtung (130) gemäß einem der vorhergehenden Ansprüche, die eingerichtet ist, das erste Fahrzeug (120) auf Basis des Merkmals-Codeworts (113) zu authentifizieren.

11. System (100) gemäß Anspruch 10, wobei
- das System (100) zumindest eine Abrechnungseinheit (140) eines Abrechnungs-Dienstleisters umfasst; und
- die Sensoreinheit (112) eingerichtet ist, eine vordefinierte Zeichenfolge, insbesondere ein vordefiniertes SALT, zur Verschlüsselung des Fahrzeug-Merkmals (122) eines Fahrzeugs (120) und zur Ermittlung des Merkmals-Codeworts (113) des Fahrzeugs (120) von dem Abrechnungs-Dienstleister zu empfangen.

12. System (100) gemäß Anspruch 11, wobei
- die vordefinierte Zeichenfolge zeitlich befristet ist; und/oder
- die vordefinierte Zeichenfolge nur räumlich begrenzt gültig ist; und/oder
- die vordefinierte Zeichenfolge nur für ein oder mehrere bestimmte Funktionen gültig ist.

13. System (100) gemäß einem der Ansprüche 10 bis 12, wobei
- das System (100) eine Mehrzahl von unterschiedlichen Authentifizierungs-Vorrichtungen (130) für eine entsprechende Mehrzahl von jeweils unterschiedlichen Referenz-Codewörtern (201) umfasst; und
- die Sensoreinheit (112) eingerichtet ist, auf Basis einer Eigenschaft des ermittelten Merkmals-Codewortes (113) zu ermitteln, an welche der Mehrzahl von unterschiedlichen Authentifizierungs-Vorrichtungen (130) das Merkmals-Codewort (113) zur Authentifizierung zu übermitteln ist.

14. Verfahren (300) zur Authentifizierung eines ersten Fahrzeugs (120) für eine Funktion; wobei das Verfahren (300) umfasst,
- Ermitteln (301) eines von einem Fahrzeug-Merkmal (122) des ersten Fahrzeugs (120) abhängigen Merkmals-Codewortes (113);
- Vergleichen (302) des Merkmals-Codewortes (113) mit einer Vielzahl von unterschiedlichen Referenz-Codewörtern (201) für eine entsprechende Vielzahl von unterschiedlichen Fahrzeugen (120); wobei die Vielzahl von Referenz-Codewörtern (201) mehrere Teilgruppen von Referenz-Codewörtern (201) umfasst; wobei die Referenz-Codewörter (201) von unterschiedlichen Teilgruppen mit jeweils einer unterschiedlichen Zeichenfolge verschlüsselt wurden; wobei die Referenz-Codewörter (201) der gleichen Teilgruppe mit der gleichen Zeichenfolge verschlüsselt wurden;
- Bestimmen (303), auf Basis der Vergleiche, ob das erste Fahrzeug (120) für die Funktion authentifiziert ist oder nicht;
- Ermitteln, auf Basis der Vergleiche, dass ein erstes Referenz-Codewort (201) aus der Vielzahl von Referenz-Codewörtern (201) dem ersten Merkmals-Codewort (113) entspricht; und
- Ermitteln, auf Basis der Zeichenfolge, die zur Verschlüsselung des ersten Referenz-Codewortes (201) verwendet wurde, einer Anbietereinheit (110) eines Anbieters der Funktion und/oder einer Abrechnungseinheit (140) zur Abrechnung einer Gebühr für die erbrachte Funktion.

## Claims

1. Device (130) for authenticating a first vehicle (120) for a function; wherein the device (130) is designed
- to ascertain a feature codeword (113) dependent on a vehicle feature (122) of the first vehicle (120);
- to compare the feature codeword (113) with a plurality of different reference codewords (201) for a corresponding plurality of different vehicles (120); wherein the plurality of reference codewords (201) comprises multiple subgroups of reference codewords (201); wherein the reference codewords (201) of different subgroups have been encrypted with in each case a different character string; wherein the reference codewords (201) of the same subgroup have been encrypted with the same character string;
- to determine, on the basis of the comparisons, whether or not the first vehicle (120) is authenticated for the function;
- to ascertain, on the basis of the comparisons, that a first reference codeword (201) from the plurality of reference codewords (201) corresponds to the first feature codeword (113); and
- to ascertain, on the basis of the character string that was used for encrypting the first reference codeword (201), a provider unit (110) of a provider of the function and/or a billing unit (140) for billing a fee for the function performed.

2. Device (130) according to Claim 1, wherein the device (130) is designed so as, if it is determined that the first vehicle (120) is authenticated for the function,
- to transmit a response (133) to a provider unit (110) of a provider of the function in order to prompt provision of the function; and/or
- to transmit a response (133) to a signalling unit, wherein the signalling unit is designed to signal to a user of the first vehicle (120) that it has been determined that the first vehicle (120) is authenticated for the function; and/or
- to prompt a billing unit (140) to transfer a fee for the provided function from a user of the first vehicle (120) to the provider of the function.

3. Device (130) according to one of the preceding claims, wherein the plurality of reference codewords (201) and the feature codeword have each been ascertained
- on the basis of a uniform vehicle feature (122); and/or
- on the basis of a uniform cryptographic hash function.

4. Device (130) according to one of the preceding claims, wherein the plurality of reference codewords (201) and the feature codeword have been encrypted by means of at least one predefined character string, in particular by means of at least one predefined SALT.

5. Device (130) according to one of the preceding claims, wherein the device (130) is designed
- to determine that the first vehicle (120) is authenticated for the function if a reference codeword (201) that corresponds to the feature codeword (113) is identified from the plurality of reference codewords (201); and/or
- to determine that the first vehicle (120) is not authenticated for the function if no reference codeword (201) that corresponds to the feature codeword (113) is identified from the plurality of reference codewords (201) .

6. Device (130) according to one of the preceding claims, wherein the device (130) is designed to receive and store in a reference database (200) the plurality of reference codewords (201) from one or more different service providers in order to bill a fee for a function performed.

7. Device (130) according to Claim 6, wherein the device (130) is designed
- to receive a certificate for a reference codeword from a specific service provider and for a specific vehicle (120);
- to check, on the basis of the certificate, whether the service provider is authorized to bill a fee for a function performed for the specific vehicle (120); and
- to reject the reference codeword if it is ascertained that the service provider is not authorized to bill a fee for a function performed for the specific vehicle (120).

8. Device (130) according to one of the preceding claims, wherein the vehicle feature (122) comprises, in particular is, a registration number of the first vehicle (120) .

9. Device (130) according to one of the preceding claims, wherein the function comprises
- taking in an energy carrier for driving the first vehicle (120);
- entering a restricted-entry region; and/or
- parking the first vehicle (120) on a parking lot or in a parking garage.

10. System (100) for authenticating a first vehicle (120) for a function; wherein the system (100) comprises
- a sensor unit (112) that is designed
- to capture a vehicle feature (122) of the first vehicle (120); and
- to ascertain a feature codeword (113) on the basis of the vehicle feature (122); and
- an authentication device (130) according to one of the preceding claims, which is designed to authenticate the first vehicle (120) on the basis of the feature codeword (113).

11. System (100) according to Claim 10, wherein
- the system (100) comprises at least one billing unit (140) of a billing service provider; and
- the sensor unit (112) is designed to receive from the billing service provider a predefined character string, in particular a predefined SALT, for encrypting the vehicle feature (122) of a vehicle (120) and for ascertaining the feature codeword (113) of the vehicle (120) .

12. System (100) according to Claim 11, wherein
- the predefined character string is time-limited; and/or
- the predefined character string has only spatially limited validity; and/or
- the predefined character string is only valid for one or more specific functions.

13. System (100) according to one of Claims 10 to 12, wherein
- the system (100) comprises a plurality of different authentication devices (130) for a corresponding plurality of respectively different reference codewords (201); and
- the sensor unit (112) is designed to ascertain, on the basis of a property of the ascertained feature codeword (113), to which of the plurality of different authentication devices (130) the feature codeword (113) is to be transmitted for authentication.

14. Method (300) for authenticating a first vehicle (120) for a function; wherein the method (300) comprises
- ascertaining (301) a feature codeword (113) dependent on a vehicle feature (122) of the first vehicle (120) ;
- comparing (302) the feature codeword (113) with a plurality of different reference codewords (201) for a corresponding plurality of different vehicles (120); wherein the plurality of reference codewords (201) comprises multiple subgroups of reference codewords (201); wherein the reference codewords (201) of different subgroups have been encrypted with in each case a different character string; wherein the reference codewords (201) of the same subgroup have been encrypted with the same character string;
- determining (303), on the basis of the comparisons, whether or not the first vehicle (120) is authenticated for the function;
- ascertaining, on the basis of the comparisons, that a first reference codeword (201) from the plurality of reference codewords (201) corresponds to the first feature codeword (113); and
- ascertaining, on the basis of the character string that was used for encrypting the first reference codeword (201), a provider unit (110) of a provider of the function and/or a billing unit (140) for billing a fee for the function performed.

## Revendications

1. Dispositif (130) permettant d'authentifier un premier véhicule (120) pour une fonction ; le dispositif (130) étant conçu pour
- établir un mot de code de particularité (113) dépendant d'une particularité de véhicule (122) du premier véhicule (120) ;
- comparer le mot de code de particularité (113) avec une pluralité de mots de code de référence (201) différents pour une pluralité correspondante de véhicules (120) différents ; dans lequel la pluralité de mots de code de référence (201) comprend plusieurs sous-groupes de mots de code de référence (201) ; dans lequel les mots de code de référence (201) de différents sous-groupes ont été chiffrés avec respectivement une chaîne de caractères différente ; dans lequel les mots de code de référence (201) du même sous-groupe ont été chiffrés avec respectivement la même chaîne de caractères ;
- déterminer sur la base des comparaisons si le premier véhicule (120) est authentifié ou non pour la fonction ;
- établir sur la base des comparaisons qu'un premier mot de code de référence (201) parmi la pluralité de mots de code de référence (201) correspond au premier mot de code de particularité (113) ; et
- sur la base de la chaîne de caractères qui a été utilisée pour chiffrer le premier mot de code de référence (201), établir une unité de fournisseur (110) d'un fournisseur de la fonction et/ou une unité de facturation (140) pour facturer une redevance pour la fonction rendue.

2. Dispositif (130) selon la revendication 1, dans lequel, lorsqu'il est déterminé que le premier véhicule (120) est authentifié pour la fonction, le dispositif (130) est agencé pour
- envoyer un retour (133) à l'unité de fournisseur (110) d'un fournisseur de la fonction afin de provoquer la fourniture de la fonction ; et/ou
- envoyer un retour (133) à une unité de signalisation, l'unité de signalisation étant conçue pour signaler à un utilisateur du premier véhicule (120) qu'il a été déterminé que le premier véhicule (120) est authentifié pour la fonction ; et/ou
- amener une unité de facturation (140) à transmettre une redevance pour la fonction fournie d'un utilisateur du premier véhicule (120) au fournisseur de la fonction.

3. Dispositif (130) selon l'une quelconque des revendications précédentes, dans lequel la pluralité de mots de code de référence (201) et le mot de code de particularité ont été établis respectivement
- sur la base d'une particularité de véhicule uniforme (122) ; et/ou
- sur la base d'une fonction de hachage cryptographique uniforme.

4. Dispositif (130) selon l'une quelconque des revendications précédentes, dans lequel la pluralité de mots de code de référence (201) et le mot de code de particularité sont chiffrés au moyen d'au moins une chaîne de caractères prédéfinie, en particulier au moyen d'au moins un SALT prédéfini.

5. Dispositif (130) selon l'une quelconque des revendications précédentes, le dispositif (130) étant conçu pour
- déterminer que le premier véhicule (120) est authentifié pour la fonction si un mot de code de référence (201) parmi la pluralité de mots de code de référence (201) est identifié qui correspond au mot de code de particularité (113) ; et/ou
- déterminer que le premier véhicule (120) n'est pas authentifié pour la fonction si aucun mot de code de référence (201) parmi la pluralité de mots de code de référence (201) n'est identifié qui correspond au mot de code de particularité (113).

6. Dispositif (130) selon l'une quelconque des revendications précédentes, le dispositif (130) étant conçu pour recevoir la pluralité de mots de code de référence (201) d'un ou de plusieurs fournisseurs de service différents pour facturer une redevance pour une fonction rendue et pour la stocker dans une base de données de référence (200).

7. Dispositif (130) selon la revendication 6, le dispositif (130) étant conçu pour
- recevoir un certificat pour un mot de code de référence d'un fournisseur de service déterminé et pour un véhicule déterminé (120) ;
- vérifier sur la base du certificat si le fournisseur de service est autorisé à facturer une redevance pour une fonction rendue pour le véhicule déterminé (120) ; et
- rejeter le mot de code de référence lorsqu'il est établi que le fournisseur de service n'est pas autorisé à facturer une redevance pour une fonction rendue pour le véhicule déterminé (120).

8. Dispositif (130) selon l'une quelconque des revendications précédentes, dans lequel la particularité de véhicule (122) comprend, en particulier est, une caractéristique du premier véhicule (120).

9. Dispositif (130) selon l'une quelconque des revendications précédentes, la fonction comprenant
- un logement d'une source énergétique pour entraîner le premier véhicule (120) ;
- un accès à une zone à accès limité ; et/ou
- un stationnement du premier véhicule (120) sur un parc de stationnement ou dans un parking.

10. Système (100) permettant d'authentifier un premier véhicule (120) pour une fonction ; le système (100) comprenant
- une unité de capteur (112) qui est conçue pour
- détecter une particularité de véhicule (122) du premier véhicule (120) ; et
- établir un mot de code de particularité (113) sur la base de la particularité de véhicule (122) ; et
- un dispositif d'authentification (130) selon l'une quelconque des revendications précédentes qui est conçu pour authentifier le premier véhicule (120) sur la base du mot de code de particularité (113).

11. Système (100) selon la revendication 10, dans lequel
- le système (100) comprend au moins une unité de facturation (140) d'un fournisseur de service de facturation ; et
- l'unité de capteur (112) est conçue pour recevoir du fournisseur de service de facturation une chaîne de caractères prédéfinie, en particulier un SALT prédéfini, pour chiffrer la particularité de véhicule (122) d'un véhicule (120) et pour établir le mot de code de particularité (113) du véhicule (120).

12. Système (100) selon la revendication 11, dans lequel
- la chaîne de caractères prédéfinie est limitée dans le temps ; et/ou
- la chaîne de caractères prédéfinie n'est valable que de manière physiquement limitée ; et/ou
- la chaîne de caractères prédéfinie n'est valable que pour une ou plusieurs fonctions déterminées.

13. Système (100) selon l'une quelconque des revendications 10 à 12, dans lequel
- le système (100) comprend une pluralité de dispositifs d'authentification différents (130) pour une pluralité correspondante de mots de code de référence (201) respectivement différents ; et
- l'unité de capteur (112) est conçue pour établir sur la base d'une propriété du mot de code de particularité (113) établi à quels dispositifs de la pluralité de dispositifs d'authentification (130) différents le mot de code de particularité (113) est à transmettre pour l'authentification.

14. Procédé (300) permettant d'authentifier un premier véhicule (120) pour une fonction ; le procédé(300) comprenant les étapes consistant à
- établir (301) un mot de code de particularité (113) dépendant d'une particularité de véhicule (122) du premier véhicule (120) ;
- comparer (302) le mot de code de particularité (113) avec une pluralité de mots de code de référence (201) différents pour une pluralité correspondante de véhicules (120) différents ; dans lequel la pluralité de mots de code de référence (201) comprend plusieurs sous-groupes de mots de code de référence (201) ; dans lequel les mots de code de référence (201) de différents sous-groupes ont été chiffrés avec respectivement une chaîne de caractères différente ; dans lequel les mots de code de référence (201) du même sous-groupe ont été chiffrés avec respectivement la même chaîne de caractères ;
- déterminer (303) sur la base des comparaisons si le premier véhicule (120) est authentifié ou non pour la fonction ;
- établir sur la base des comparaisons qu'un premier mot de code de référence (201) parmi la pluralité de mots de code de référence (201) correspond au premier mot de code de particularité (113) ; et
- établir sur la base de la chaîne de caractères qui a été utilisée pour chiffrer le premier mot de code de référence (201) une unité de fournisseur (110) d'un fournisseur de la fonction et/ou une unité de facturation (140) pour facturer une redevance pour la fonction rendue.
